# EUROPEAN PATENT APPLICATION

(11) **EP 4 738 195 A1**
(43) Date of publication of application: **06.05.2026**
(21) Application number: 25166370.4
(22) Date of filing: 26.03.2025
(51) Int. Cl.: G06N 3/045, G06N 3/0475, G06N 3/0499, G06N 3/096

(54) **ARCHITECTURE AND TRAINING METHOD FOR MULTIMODAL CONTENT MODERATION MODEL**

(30) Priority: 31.10.2024 US 202418933984
(71) Applicant: Intuit Inc., Mountain View, CA 94043 (US)
(72) Inventor: RIMCHALA, Tharathorn, Mountain View, 94043 (GB); PENA PENA, Karelia Del Carmen, Mountain View, 94043 (GB)
(74) Representative: D Young & Co LLP

(57) **Abstract**

Certain aspects provide a method of performing content moderation with a multimodal machine learning (ML) architecture, wherein: the multimodal ML architecture includes: a plurality of encoders, each configured to encode content of one of a plurality of modalities; a plurality of projectors, each associated with one of the plurality of encoders and configured to process output from the one of the plurality of encoders; and a large language model configured to generate a content moderation output based on outputs from the plurality of projectors, and the method includes: processing an input including contents of the plurality of modalities to generate a plurality of embeddings associated, respectively, with the plurality of modalities; processing the plurality of embeddings to generate a plurality of projected embeddings, each including a parameter number that the large language model is configured to process; and processing the plurality of projected embeddings to generate the content moderation output.

## Description

### BACKGROUND

### Field

Aspects of the present disclosure relate to content moderation using a multimodal machine learning (ML) architecture and methods for training a multimodal content moderation model.

### Description of Related Art

Creation and consumption of digital content is now ubiquitous. More recently, machine learning models, such as large language models, are being used to generate content. Intentionally or unintentionally, machine-generated content may include harmful content. Harmful content includes, for example, impolite, rude, insensitive, obscene, illegal, profane, insulting, and/or otherwise offensive content. The presence of such harmful content in the machine-generated content may lead to significant consequences, including legal consequences, loss of employment, etc.

Content moderation is generally the process of determining whether content is harmful. One way of performing content moderation is to prompt an ML model to determine whether content is harmful. However, determining content as harmful through an ML model may not always be straightforward, such as when the content is multimodal (e.g., including text and images). For example, a text, such as "13-year-old me forced by my parents to talk to a relative I never met in my life," by itself may not necessarily be considered harmful. However, when this text is placed within an image of an animal holding a phone and making an obscene gesture and/or combined with an audio of shouting of an obscene phrase, the combined content may be identified as being harmful. Thus, identifying multimodal content as being harmful poses a challenging technical problem. Accordingly, there is a need for an improved method of content moderation.

### SUMMARY

Particular aspects are set out in the appended independent claims. Various optional embodiments are set out in the dependent claims.

One aspect provides a method of performing content moderation with a multimodal ML architecture, wherein: the multimodal ML architecture comprises: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, and the method comprises: processing, with the plurality of encoders, an input comprising contents of the plurality of modalities to generate a plurality of embeddings associated, respectively, with the plurality of modalities; processing, with the plurality of projectors, the plurality of embeddings to generate a plurality of projected embeddings, each projected embedding comprising a parameter number that the large language model is configured to process; and processing, with the large language model, the plurality of projected embeddings to generate the content moderation output.

Another aspect provides a method of training a multimodal ML architecture to perform content moderation, wherein: the multimodal ML architecture comprises: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, and the method comprises: performing a first stage of training, including training each of the plurality of projectors based on one or more unique bi-modality datasets while freezing parameters of the plurality of encoders and the large language model; performing a second stage of training, including training each of the plurality of projectors based on one or more tri-modality datasets while freezing the parameters of the plurality of encoders and the large language model; and performing a third stage of training, including training each of the plurality of projectors, one or more low-rank adaptation (LoRA) layers of each of the plurality of encoders, and one or more LoRA layers of the large language model.

Other aspects provide processing systems configured to perform the aforementioned methods as well as those described herein; computer-readable mediums comprising instructions that, when executed by one or more processors of a processing system, cause the processing system to perform the aforementioned methods as well as those described herein; a computer program product embodied on a computer readable storage medium comprising code for performing the aforementioned methods as well as those described herein; and a processing system comprising means for performing the aforementioned methods as well as those described herein.

The following description and the related drawings set forth in detail certain illustrative features of one or more aspects.

### DESCRIPTION OF THE DRAWINGS

The appended figures depict certain aspects and are therefore not to be considered limiting of the scope of this disclosure.
**FIG. 1** depicts an example computing environment of a multimodal ML architecture.
**FIG. 2** depicts additional details regarding the example computing environment of the multimodal ML architecture of **FIG. 1****.**
**FIG. 3** depicts further details regarding the example computing environment of the multimodal ML architecture of **FIG. 1****.**
**FIG. 4** depicts details regarding how a prompt for the multimodal ML architecture of **FIG. 1** is generated.
**FIG. 5** depicts an example computing environment of a multimodal ML architecture training system.
**FIG. 6** depicts an example flowchart illustrating a method of performing content moderation with a multimodal ML architecture.
**FIG. 7** depicts an example flowchart illustrating a method of training a multimodal ML architecture to perform content moderation.
**FIG. 8** depicts an example processing system with which aspects of the present disclosure can be performed.

To facilitate understanding, identical reference numerals have been used, where possible, to designate identical elements that are common to the drawings. It is contemplated that elements and features of one aspect may be beneficially incorporated in other aspects without further recitation.

### DETAILED DESCRIPTION

Aspects of the present disclosure provide apparatuses, methods, processing systems, and computer-readable mediums for content moderation using a multimodal ML architecture as well as training methods for the multimodal ML architecture.

Aspects of the present disclosure address various limitations of the state of the art in content moderation of multimodal content by leveraging a multimodal large language model (MLLM) architecture. Aspects described herein provide a training method that enables a large language model (LLM) that is pre-trained for unimodal content moderation (e.g., for moderation of text content) to be utilized for multimodal content moderation. Specifically, instead of fine-tuning end-to-end an MLLM architecture including an LLM to perform multimodal content moderation, aspects described herein leverage a multimodal multilayer perceptron (MLP) projector to combine an instruction-tuned LLM-based content moderation model with multimodal encoders to encode non-textual inputs. For example, the multimodal encoders may include a visual encoder and/or an audio encoder.

MLP refers to a feedforward artificial neural network (NN) having fully connected neurons with a nonlinear activation function. The MLP projector is used to project a set of features of a multimodal content as encoded by the multimodal encoders to a representation that the LLM is configured to process.

Furthermore, aspects described herein utilize modality-specific and parameter-efficient fine-tuning of LoRA parameters. Fine-tuning of LoRA parameters is a way to efficiently fine-tune NN-based models without having to train all the parameters. In the aspects described herein, LoRA parameters include tunable matrices of features injected into the MLLM architecture, for example, to adapt the LLM to process multimodal content outputs from the MLP projector while the pre-trained parameters of the LLM trained for unimodal content moderation are kept frozen (e.g., excluded from training). Accordingly, aspects of the present disclosure enable an LLM that is pre-trained for unimodal content moderation to be utilized for both unimodal content moderation and multimodal content moderation.

A general technical problem associated with multimodal content moderation is that existing multimodal content moderation models, such as those based on non-generative architecture, lack an instruction-following capability. Existing multimodal ML models are typically classifiers and lack an instruction-following capability and an ability to learn in context. For example, while these existing multimodal ML models may be able to describe a multimodal content generally, they cannot follow an instruction to identify a multimodal content as being harmful at inference time according to a set of rules provided as part of a prompt. It is desirable for multimodal ML models to be able to follow instructions because the instruction-following capability improves zero-shot capabilities of the multimodal ML models to perform new tasks instructed via prompts. Zero-shot capabilities refer to capabilities of performing new tasks without seeing any examples related to the new tasks beforehand. An example of such new tasks may be content moderation based on continuously-evolving rules for identifying harmful content. For example, instruction-tuned multimodal ML models can be prompted to determine whether content is harmful according to a set of rules or examples provided at inference time. The instruction-tuned multimodal ML models do not need to be trained on any labeled data related to the set of rules provided in the prompt.

If a multimodal ML model that is not instruction-tuned were to be fine-tuned for adapting to a new set of rules each time there is a change in the rules, such fine-tuning conventionally requires an end-to-end training of the multimodal ML model based on a training dataset labeled according to the new set of rules. Training an ML model end-to-end in this manner often requires a significant amount of time and compute resources, and creates an inherent latency with respect to deploying updated models.

Aspects of the present disclosure overcome the technical problems of the conventional approaches and improve upon the state of the art by introducing a multimodal ML architecture that includes MLPs that connect multimodal encoders with an instruction-tuned LLM. The multimodal encoders encode non-textual portions of a multimodal content into representations, such as vector embeddings, that may be processed by an LLM (e.g., a unimodal LLM) trained to process text inputs. In one example, the multimodal encoders include a visual encoder and/or an audio encoder. The MLPs are fine-tuned for feature-alignment from a first representation associated with the multimodal encoder embeddings to a second representation that the unimodal LLM is configured to process. Thus, the MLPs allow the encoded data corresponding to multimodal content from the multimodal encoders to be projected to a representation that can be processed by the unimodal LLM for content moderation.

The multimodal ML architecture is then fine-tuned to follow instructions. Specifically, aspects described herein construct a fine-tuning dataset for content moderation. The fine-tuning dataset may include customizable content moderation instructions and unimodal and multimodal contents. The fine-tuning tunes only the MLPs and LoRA parameters of the multimodal encoders and the LLM to preserve the parameters pre-trained for, respectively, content encoding and unimodal content moderation. Keeping the pre-trained parameters of the multimodal encoders and the LLM frozen provides a technical benefit of vastly reducing the resource burden (e.g., compute, power, and time) of adapting the encoding capabilities of the pre-trained multimodal encoders and the unimodal content moderation capabilities of the pre-trained LLM.

Furthermore, the instruction-following capability of the MLLM architecture may be achieved despite fine-tuning only the MLPs and the LoRA parameters of the multimodal encoders and the LLM, without fine-tuning the entire MLLM architecture end-to-end. Here again, a technical improvement is achieved in that compute, power, and time resources are saved.

### Example Computing Environment of a Multimodal ML Architecture

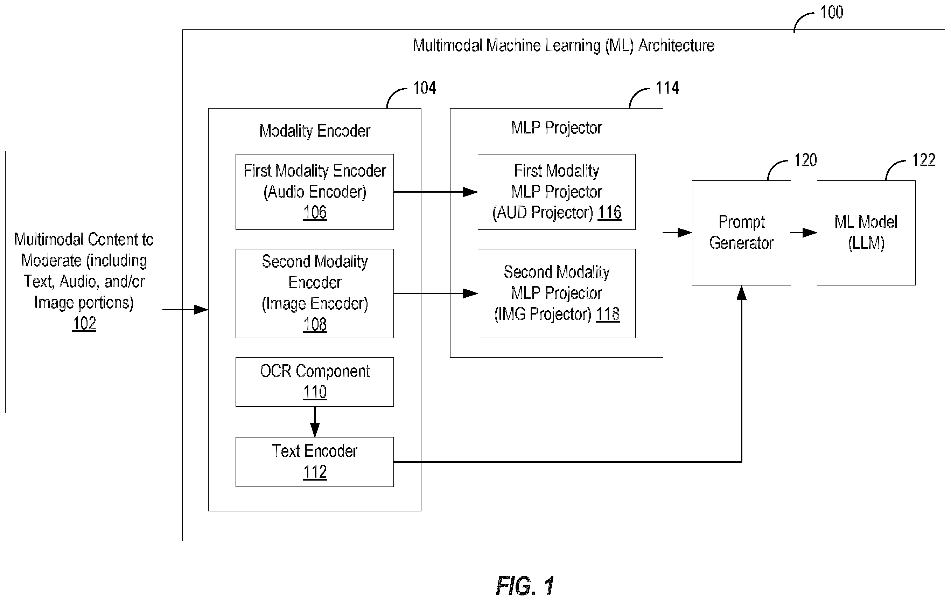

**FIG. 1** depicts an example computing environment of multimodal ML architecture 100. Multimodal ML architecture 100 includes modality encoder 104, MLP projector 114, prompt generator 120, and ML model 122. Modality encoder 104 includes first modality encoder 106, second modality encoder 108, optical character recognition (OCR) component 110, and text encoder 112. MLP projector 114 includes first modality MLP projector 116 and second modality MLP projector 118. Multimodal ML architecture 100 receives multimodal content 102 to moderate, and generates a content moderation output corresponding to multimodal content 102.

Modality encoder 104 is configured to process multimodal content 102 to encode multimodal components of multimodal content 102. Multimodal content 102 may include any combination of contents of text, image, and/or audio modalities, such as (1) text and image contents, (2) text and audio contents, (3) image and audio contents, (4) text, image, and audio contents, etc. Examples of multimodal content 102 may include an image with an embedded text, a video, etc. In certain aspects, multimodal content 102 may be represented as bytes, and then, a modality-specific data loader may be used to load the bytes of multimodal content 102 into an object in memory. This object may in turn be converted to a numerical array, which may be provided as an input to modality encoder 104 or its modality-specific encoders such as first modality encoder 106 and second modality encoder 108. In some aspects, a path to an original version of multimodal content 102, as stored on a data storage system such as a cloud storage system, may be encoded in a structured data form. The path encoded in the structured data form may be used as an input for modality encoder 104, such that modality encoder 104 may load multimodal content 102 in its original format from a location specified by the path. In certain aspects, multimodal content 102 may be stored and communicated in a structured data form such as dictionary, JavaScript Object Notation (JSON) object, etc. having key-and-value pairs corresponding to the multimodal components. In certain aspects, multimodal ML architecture 100 may include a feature extraction component to extract individual multimodal components of multimodal content 102 that first modality encoder 106 and/or second modality encoder 108 can process. Furthermore, in such aspects, OCR component 110 may be a part of the feature extraction logic, where OCR component 110 may extract textual modality of multimodal content 102 that text encoder 112 can process.

In certain aspects, first modality encoder 106 is an audio encoder configured to encode an audio content of multimodal content 102 into a first numerical representation, such as a vector of weights for parameters corresponding to various audio features of multimodal content 102. Second modality encoder 108 is an image encoder configured to encode an image content of multimodal content 102 into a second numerical representation, such as a vector of weights for parameters corresponding to various image features of multimodal content 102. Each of the first numerical representation and the second numerical representation may be referred to as an embedding, such as an audio embedding and an image embedding, respectively. In some aspects, each of first modality encoder 106 and second modality encoder 108 may be a pre-trained neural network trained to encode a content of a non-textual modality, such as audio modality or image modality, and to generate an embedding associated with a respective non-textual modality. For example, first modality encoder 106 may encode the audio content of multimodal content 102 to generate a first embedding associated with the audio content, and second modality encoder 108 may encode the image content of multimodal content 102 to generate a second embedding associated with the image content.

In certain aspects, OCR component 110 may process multimodal content 102 to detect content of textual modality within multimodal content 102. For example, OCR component 110 may detect a text embedded within an image. OCR component 110 may provide the text content from multimodal content 102 to text encoder 112. Text encoder 112 may be configured to encode the text content from multimodal content 102 into a numerical representation, such as an embedding associated with the text content.

MLP projector 114, including first modality MLP projector 116 and second modality MLP projector 118, is configured to process the embeddings generated by modality encoder 104 to generate projected embeddings, each having a parameter that ML model 122 is configured to process. In certain aspects, ML model 122 is an LLM. For example, ML model 122 may be a pre-trained LLM trained for unimodal content moderation. In order to adapt content moderation capabilities of such pre-trained LLM for multimodal content moderation, aspects of the present disclosure use MLP projector 114 to generate the projected embeddings based on the embeddings generated by modality encoder 104 of multimodal content 102. Particularly, MLP projector 114 is used to project a set of features of a multimodal content as encoded by modality encoder 104 to a representation that the pre-trained LLM is configured to process. For example, first modality MLP projector 116 and second modality MLP projector 118 of MLP projector 114 may be trained for such feature projection, where first modality MLP projector 116 and second modality MLP projector 118 may be trained to transform the embeddings generated by, respectively, first modality encoder 106 and second modality encoder 108 into the projected embeddings, each having a parameter number that ML model 122 is configured to process. The feature projection may be linear or nonlinear. A linear feature projection may include a linear mapping of parameters between the embeddings generated by modality encoder 104 and the projected embeddings generated by MLP projector 114. A nonlinear feature projection may include a mapping of data, for example, from a higher parameter number associated with an embedding generated by modality encoder 104 to a lower parameter number associated with a projected embedding generated by MLP projector 114, or *vice versa.*

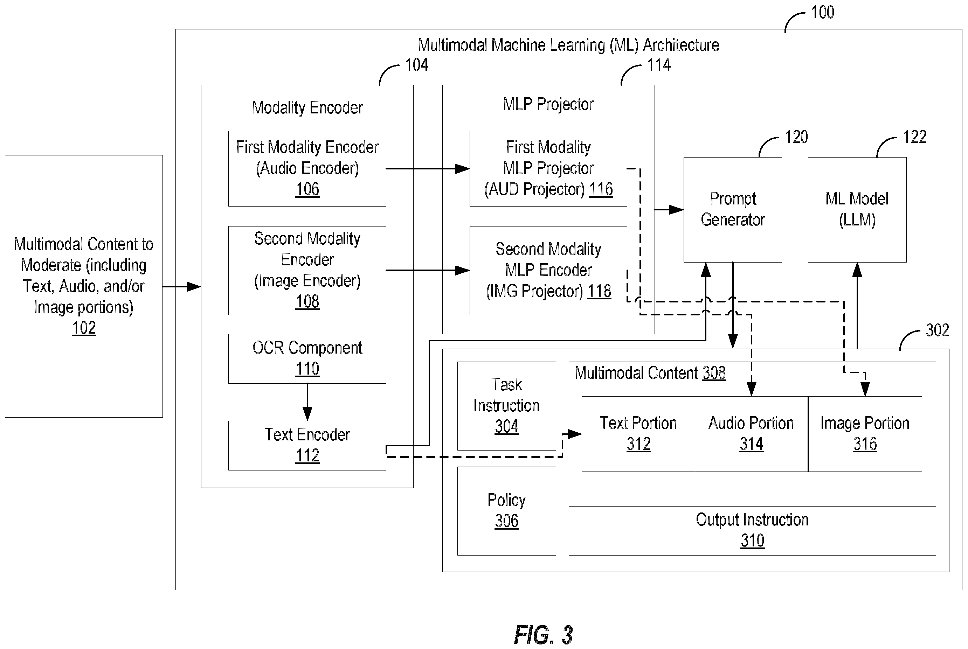

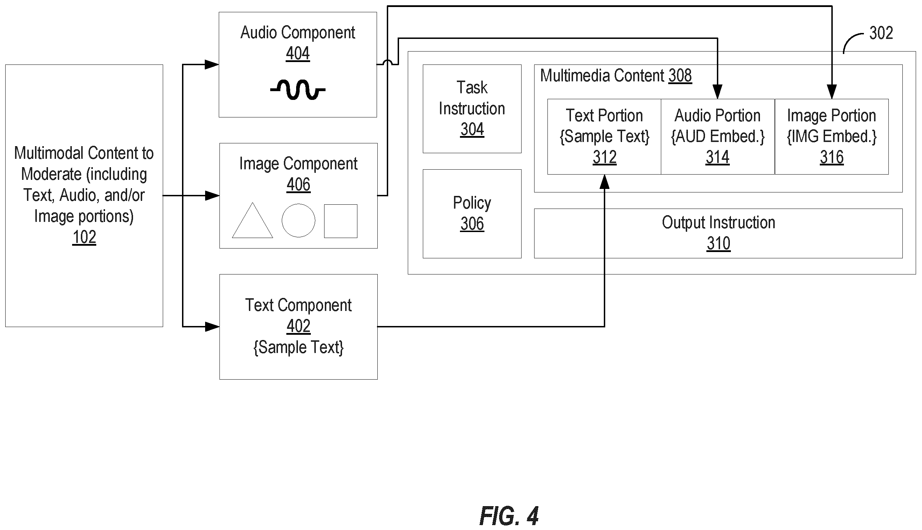

For example, first modality MLP projector 116 projects a first embedding associated with an audio content of multimodal content 102, as generated by first modality encoder 106, into a first projected embedding having a parameter number that ML model 122 is configured to process. Second modality MLP projector 118 projects a second embedding associated with an image content of multimodal content 102, as generated by second modality encoder 108, into a second projected embedding having the parameter number that ML model 122 is configured to process. As described further with respect to **FIGS. 3** and **4****,** prompt generator 120 receives the first projected embedding and the second projected embedding, as well as an embedding associated with a text content of multimodal content 102, as generated by text encoder 112, to generate a prompt for ML model 122. ML model 122 processes the prompt, including the first projected embedding, the second projected embedding, and the embedding associated with the text content, to generate a content moderation output.

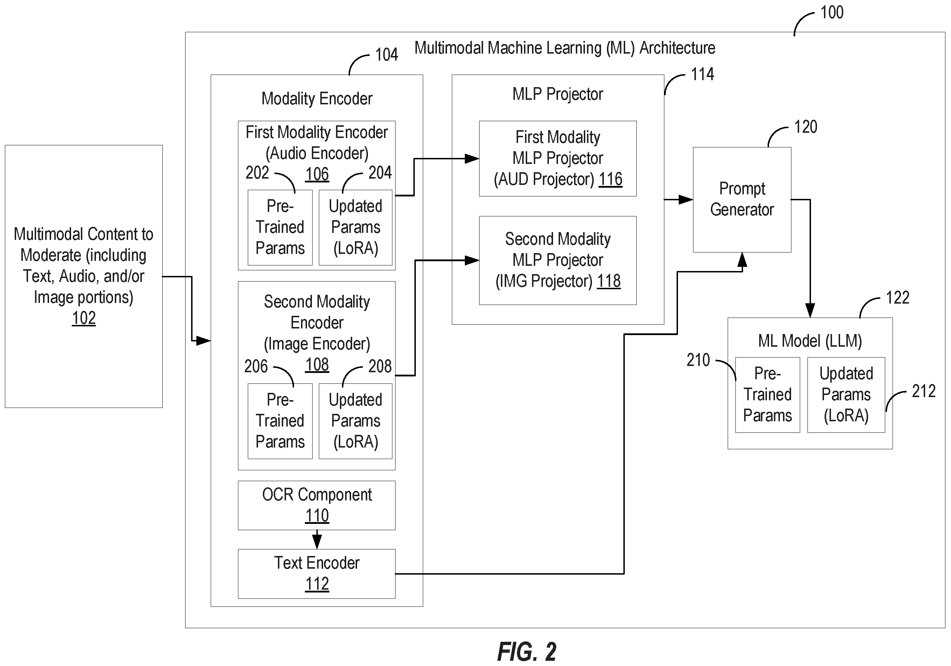

**FIG. 2** depicts additional details regarding the example computing environment of multimodal ML architecture 100 of **FIG. 1****.** As depicted, first modality encoder 106 includes a plurality of first pre-trained parameters 202 and a plurality of first updated parameters 204, and second modality encoder 108 includes a plurality of second pre-trained parameters 206 and a plurality of second updated parameters 208. Furthermore, ML model 122 includes a plurality of third pre-trained parameters 210 and a plurality of third updated parameters 212.

In certain aspects, ML model 122, a pre-trained LLM, has an intrinsically low rank. A rank of a model refers to a number of parameters that can be fine-tuned to achieve a substantially similar performance compared to when the model is fine-tuned end-to-end, where an end-to-end fine-tuning refers to fine-tuning all parameters of a model. Performance of a model may be measured by accuracy of a machine learning task, such as a next token prediction accuracy. The next token prediction accuracy may refer to a percentage of tokens predicted correctly for pre-training and fine-tuning tasks. Moreover, "low rank" means the dimensionality of the inner layer of the adapter of the model is much smaller than the dimensionality of the input/output layer. A model with a low rank has a "bottleneck" design, which aids the model to learn the most compact representations while maximizing the model performance. Such design has a regularization effect that helps avoid overfitting during training. The intrinsically low rank of ML model 122 means that the number of parameters that need to be fine-tuned for adapting ML model 122, for example, for multimodal content moderation described herein is lower than the total number of parameters of the ML model 122. Accordingly, fine-tuning of ML model 122 (which has been pre-trained for unimodal content moderation) may include fine-tuning a subset of parameters of ML model 122, while keeping the other parameters frozen.

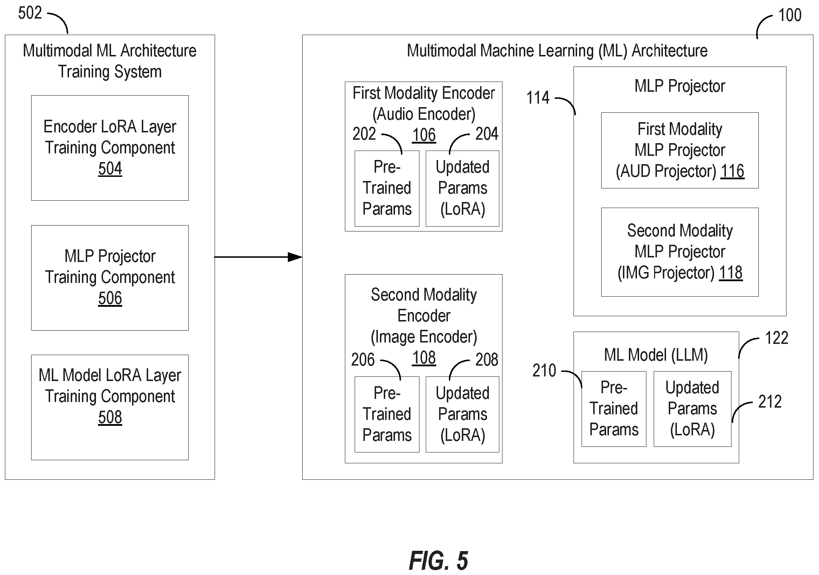

Similarly, in some aspects, first modality encoder 106 and/or second modality encoder 108 may each have an intrinsically low rank. The updated parameters, such as first updated parameters 204 of first modality encoder 106, second updated parameters 208 of second modality encoder 108, and third updated parameters 212 of ML model 122 are associated with LoRA layers and referred to as LoRA parameters. As described further with respect to FIG. 5, fine-tuning of first modality encoder 106, second modality encoder 108, and ML model 122 includes fine-tuning LoRA layers, while keeping, respectively, first pre-trained parameters 202, second pre-trained parameters 206, and third pre-trained parameters 210 frozen. Fine-tuning only first updated parameters 204, second updated parameters 208, and third updated parameters 212, rather than all of the parameters of first modality encoder 106, second modality encoder 108, and ML model 122, provides a technical benefit of significantly reducing the resource burden (e.g., compute, power, and time) of adapting the encoding capabilities of first modality encoder 106 and second modality encoder 108 and the unimodal content moderation capabilities of ML model 122. Moreover, aspects of the present disclosure further improve the state of the art in content moderation of multimodal content by combining fine-tuning of LoRA layers of modality encoder 104 and ML model 122 with modality-specific MLP projectors. Combining fine-tuning of LoRA layers of modality encoder 104 and ML model 122 with modality-specific MLP projectors, such as first modality MLP projector 116 and second modality MLP projector 118, adapts ML model 122, which has been pre-trained to support unimodal content moderation, to support both unimodal content moderation and multimodal content moderation settings. Accordingly, aspects of the present disclosure support moderation of multimodal content 102 having any combination of modalities of text content, audio content, and image content.

**FIG. 3** depicts further details regarding the multimodal ML architecture 100 of **FIG. 1****.** As depicted, prompt generator 120 receives an output from MLP projector 114, such as projected embeddings based on multimodal embeddings generated by modality encoder 104 of multimodal content 102, and an output from text encoder 112, such as an embedding associated with a text content of multimodal content 102, and generates content moderation prompt 302. In one example, content moderation prompt 302 includes task instruction 304, policy 306, multimodal content 308, and output instruction 310. Multimodal content 308 includes text portion 312, audio portion 314, and image portion 316. In certain aspects, multimodal content 308 may include a subset of text portion 312, audio portion 314, and/or image portion 316, depending on the modalities of multimodal content 102, without departing from the spirit and scope of the present disclosure. Prompt generator 120 provides content moderation prompt 302 to ML model 122 to generate a content moderation output based on multimodal content 102.

In certain aspects, task instruction 304 may include domain-specific information and a system message. The domain-specific information may include, for example, a field or industry in which multimodal content moderation is to be performed by ML model 122. As an example, the domain-specific information may specify that ML model 122 is for an American software company that specializes in financial software. Further, the system message may include a description of a persona and/or a capability of ML model 122. For example, the system message may specify that ML model 122 is a content moderation labeling bot, with a goal to rate whether a content provided in content moderation prompt 302 is harmful according to a set of criteria included in content moderation prompt 302.

In some aspects, policy 306 may include a customizable policy including a set of criteria for determining whether a content is harmful, including a plurality of content moderation categories and associated descriptions. For example, the plurality of content moderation categories may include domain-general categories and domain-specific categories. Non-limiting examples of domain-general categories may include Toxicity, Violence/Hate, Abuse/Harassment, Sexual Content, Self-Harm/Suicide, Criminal Activity/Terrorism, Misinformation, etc. Non-limiting examples of domain-specific categories, such as product- or use-case-specific categories, may include categories based on various legal or responsible artificial intelligence (RAI) requirements, such as related to legal requirements for different products, brand image or competitors, regulated substances such as drugs or weapons, non-violent unethical behavior, product-specific misinformation, etc. In certain aspects, policy 306 may include reasons and/or examples for determining a content as being harmful, and allow a few-shot demonstration at inference time.

In certain aspects, multimodal content 308 includes text portion 312 based on the text embedding from text encoder 112, audio portion 314 based on the projected audio embedding from first modality MLP projector 116, and image portion 316 based on the projected image embedding from second modality MLP projector 118. In some aspects, multimodal content 308 may include the text embedding from text encoder 112, the projected audio embedding from first modality MLP projector 116, and/or the projected image embedding from second modality MLP projector 118, added to a multimodal content placeholder and demarcated by one or more tokens, where a token may be an individual character, word, sub-word, phrase, or even larger linguistic unit of text. For example, multimodal content 308 may include a concatenation of the text embedding from text encoder 112, the projected audio embedding from first modality MLP projector 116, and/or the projected image embedding from second modality MLP projector 118, demarcated by one or more tokens indicating a beginning and an end of multimodal content 308 and/or beginning(s) and end(s) of the text embedding from text encoder 112, the projected audio embedding from first modality MLP projector 116, and/or the projected image embedding from second modality MLP projector 118.

In some aspects, to ensure that an output from ML model 122 can be parsed and contains relevant information for supporting content moderation needs, output instruction 310 may include a description of an output structure for a content moderation output of ML model 122. For example, the output structure of the content moderation output may include a proposed action, a content moderation category name indicative of a reason for the proposed action, a harm rating, and one or more example outputs. Examples of the proposed action may include PASS, BLOCK, and MODIFY, where PASS indicates multimodal content 102 may be used as not being harmful, BLOCK indicates multimodal content 102 should not be used as being harmful, and MODIFY indicates multimodal content 102 should be reviewed and modified as being potentially harmful. The content moderation category name may be based on and correspond to one or more of the plurality of content moderation categories included in policy 306. The harm rating may be a numerical score based on a defined rating system corresponding to a policy related to a content moderation category indicated by the content moderation category name. For example, an example policy for a content moderation category of "Violence & Hate" may encompass (1) statements that encourage or could help people plan or engage in violence and (2) statements that advocate discrimination, contain slurs, or voice hateful sentiments against people based on their sensitive personal characteristics, such as race, skin color, religion, national origin, sexual orientation, gender, gender identity, or disability. A portion of output instruction 310 related to such example policy may further define a plurality of numerical scores that correspond to, for example, a severity or level of inappropriateness of a content based on the policy. In certain aspects, the proposed action related to multimodal content 102 may be based on the harm rating, where a first value or range of values may correspond to PASS, a second value or range of values may correspond to BLOCK, and a third value or range of values may correspond to MODIFY, etc. The one or more example outputs may be provided in a structured data form, such as JSON or YAML.

In certain aspects, one or more of task instruction 304, policy 306, multimodal content 308, and/or output instruction 310, as well as any portion(s) of task instruction 304, policy 306, multimodal content 308, and output instruction 310, such as text portion 312, audio portion 314, and image portion 316 of multimodal content 308, may be demarcated by one or more tokens, where each token indicates a beginning or an end of a particular portion of content moderation prompt 302.

**FIG. 4** depicts details regarding how a prompt, such as content moderation prompt 302 of **FIG. 3****,** for multimodal ML architecture 100 of **FIG. 1** is generated. As depicted, multimodal content 102 is processed to extract text component 402, audio component 404, and image component 406 of multimodal content 102. Text component 402, audio component 404, and image component 406 may be generated by, for example, modality encoder 104 and MLP projector 114 of **FIG. 1****,** respectively. For example, text component 402, audio component 404, and image component 406 may correspond to and include the text embedding from text encoder 112, the projected audio embedding from first modality MLP projector 116, and/or the projected image embedding from second modality MLP projector 118. Text component 402, audio component 404, and image component 406 are added to, respectively, text portion 312, audio portion 314, and image portion 316 of multimodal content 308 within content moderation prompt 302 described with respect to **FIG. 3****.**

In some aspects, various portions of content moderation prompt 302, such as policy 306 and output instruction 310 described with respect to **FIG. 3****,** allow a content moderation policy, an output format, etc. to be modified at inference time. Content moderation prompt 302, in conjunction with an instruction-following capability of ML model 122 further described with respect to **FIG. 5****,** allows a user to modify the content moderation policy and/or the output format at inference time by prompt engineering, where prompt engineering refers to creating or refining a prompt to guide or instruct a model to provide a desired output. Such modification of, for example, the content moderation policy and/or the output format at inference time provides a technical benefit of mitigating the inherent latency otherwise associated with deploying updated models for implementing any change in the content moderation policy and/or the output format. For example, fine-tuning ML model 122 end-to-end each time a change in the content moderation policy and/or the output format is to be implemented would require a significant amount of time and compute resources. Such potential time and compute resources are mitigated by aspects of the present disclosure.

### Example Computing Environment of a Multimodal ML Architecture Training System

**FIG. 5** depicts an example computing environment of multimodal ML architecture training system 502. Multimodal ML architecture training system 502 includes an encoder LoRA layer training component 504, MLP projector training component 506, and ML model LoRA layer training component 508. Note, in this example, "layer" may refer to one or more layers.

As depicted, multimodal ML architecture training system 502 fine-tunes multimodal ML architecture 100 of **FIG. 1****.** For example, encoder LoRA layer training component 504 may fine-tune first modality encoder 106 and second modality encoder 108. MLP projector training component 506 may fine-tune MLP projector 114, including first modality MLP projector 116 and second modality MLP projector 118. ML model LoRA layer training component 508 may fine-tune ML model 122. Specifically, encoder LoRA layer training component 504 and ML model LoRA layer training component 508 may fine-tune respective LoRA parameters, such as first updated parameters 204 of first modality encoder 106, second updated parameters 208 of second modality encoder 108, and third updated parameters 212 of ML model 122, while keeping, respectively, first pre-trained parameters 202, second pre-trained parameters 206, and third pre-trained parameters 210 frozen, as described with respect to **FIG. 2****.**

In certain aspects, multimodal ML architecture training system 502 fine-tunes multimodal ML architecture 100 in three stages.

In the first stage of training, multimodal ML architecture training system 502 fine-tunes first modality MLP projector 116 and/or second modality MLP projector 118 for feature alignment, for example, between an embedding generated by first modality encoder 106 and a text embedding generated by text encoder 112 or between an embedding generated by second modality encoder 108 and a text embedding generated by text encoder 112. Specifically, MLP projector training component 506 may fine-tune first modality MLP projector 116 and/or second modality MLP projector 118 separately based on one or more unique bi-modality datasets while freezing parameters of first modality encoder 106, second modality encoder 108, and ML model 122. For example, MLP projector training component 506 may fine-tune first modality MLP projector 116 to generate a projected embedding based on an embedding associated with a bi-modality data instance of a bi-modality dataset including text and audio components. Such projected embedding generated by first modality MLP projector 116 is to have a parameter number that ML model 122 is configured to process, as described with respect to **FIG. 1****.** In certain aspects, a bi-modality data instance may include a text with data of another modality, such as an image or an audio. In some aspects, freezing or keeping frozen parameters of an encoder or a model may be used interchangeably with freezing or keeping frozen the encoder or the model.

Fine-tuning first modality MLP projector 116 may include supervised gradient-based learning via backpropagation and using an optimization technique such as Stochastic Gradient Descent. MLP projector training component 506 may perform a forward pass of a batch of bi-modality data instances through first modality MLP projector 116 with an initial set of weights to generate an output, which is treated as a batch of predicted values and compared against a batch of actual values associated with the batch of bi-modality data instances. Then, a loss is calculated using a loss function based on the comparison between the batch of predicted values and the batch of actual values, followed by the weights of first modality MLP projector 116 being adjusted through backpropagation. Then, this process may be repeated for the other data instances of the bi-modality dataset including text and audio components. After each iteration through an entire bi-modality training dataset, the tunable weights are iteratively updated until a convergence criterion is met. Similarly, MLP projector training component 506 may fine-tune second modality MLP projector 118 to generate a projected embedding based on an embedding associated with a batch of bi-modality data instances of another bi-modality training dataset including text and image components. MLP projector training component 506 may fine-tune second modality MLP projector 118 by using a similar process described above with respect to fine-tuning of first modality MLP projector 116, but with a bi-modality training dataset having bi-modality data instances with text and image components.

In the second stage of training, multimodal ML architecture training system 502 fine-tunes first modality MLP projector 116 and second modality MLP projector 118 further. Specifically, MLP projector training component 506 fine-tunes first modality MLP projector 116 and second modality MLP projector 118 simultaneously based on one or more tri-modality training datasets, having text, audio, and image components, while freezing parameters of first modality encoder 106, second modality encoder 108, and ML model 122. For example, MLP projector training component 506 may fine-tune first modality MLP projector 116 and second modality MLP projector 118 simultaneously by using a similar process described above with respect to fine-tuning of first modality MLP projector 116 and second modality MLP projector 118, but where the weights for both of first modality MLP projector 116 and second modality MLP projector 118 are adjusted independently at the same time during each iteration of backpropagation. Fine-tuning of first modality MLP projector 116 and second modality MLP projector 118 simultaneously using one or more tri-modality training datasets further ensures that MLP projector 114 is flexible and adaptable for working with various combinations of modalities. Moreover, the simultaneous fine-tuning in this manner saves the overtraining time since the two weight-updates are independent of each other.

In certain aspects, the tri-modality datasets used for fine-tuning of first modality MLP projector 116 and second modality MLP projector 118 may include a plurality of segmented clips of a video. Each segmented clip of the plurality of segmented clips of the video may have a threshold level of similarity (e.g., based on embedding comparison) amongst a first image at a beginning of the segmented clip, a second image at a middle of the segmented clip, and a third image at an end of the segmented clip. An example of a tri-modality dataset instance may include a video including audio and image and an embedded text within the video. In some aspects, fine-tuning of first modality MLP projector 116, such as an MLP projector specific to audio modality, may be based on audio content of the plurality of segmented clips of the video. Further, fine-tuning of second modality MLP projector 118, such as an MLP projector specific to image modality, may be based on the second (middle) images of the plurality of segmented clips of the video. By using the middle images or reducing the video to representative images, such as the middle images, of the plurality of segmented clips of the video, certain aspects may reduce the amount of images being processed while also eliminating redundant information between consecutive images in the video for the fine-tuning of second modality MLP projector 118, thereby reducing the associated latency and compute resources during the fine-tuning.

In certain aspects, the first stage of training and the second stage of training provide a curriculum-based training. Curriculum-based training may refer to a training method, where training datasets may be ranked by level of task difficulty, and a model may be trained in stages using increasingly difficult (e.g., more complex) training datasets. In the aspects of the present disclosure, fine-tuning of first modality MLP projector 116 and second modality MLP projector 118 in two stages - first, separately and based on one or more unique bi-modality datasets; and second, simultaneously and based on one or more tri-modality datasets - provides a curriculum-based training, where fine-tuning based on bi-modality datasets may be an easier (e.g., less complex) task and occurs earlier than fine-tuning based on tri-modality datasets. Such curriculum-based training may result in increased accuracy in performance of MLP projector 114.

In the third stage of training, multimodal ML architecture training system 502 fine-tunes first modality MLP projector 116, second modality MLP projector 118, and LoRA layers of first modality encoder 106, second modality encoder 108, and ML model 122. For example, encoder LoRA layer training component 504 may fine-tune LoRA layers of first modality encoder 106 and second modality encoder 108. MLP projector training component 506 may fine-tune first modality MLP projector 116 and second modality MLP projector 118. ML model LoRA layer training component 508 may fine-tune LoRA layers of ML model 122. Multimodal ML architecture training system 502 fine-tunes first modality MLP projector 116, second modality MLP projector 118, and LoRA layers of first modality encoder 106, second modality encoder 108, and ML model 122 to enable multimodal ML architecture 100 to follow instructions at inference time based on a prompt.

In certain aspects, performing the third stage of training may include fine-tuning via a supervised learning based on a content moderation instruction fine-tuning dataset, including a unimodal dataset and a multimodal dataset, where each dataset may include an associated content moderation instruction, such as a custom moderation instruction, added to a content moderation prompt template described with respect to **FIG. 3****.** Fine-tuning multimodal ML architecture 100 for instruction following allows any content moderation policy to be added to, for example, policy 306 of content moderation prompt 302 as described with respect to **FIG. 3****,** to provide the content moderation policy at inference time. Allowing the content moderation policy to be provided at inference time mitigates the need to fine-tune multimodal ML architecture 100 each time there is any change in the content moderation policy and allows the same content moderation model to be used across use cases with different policies, thereby reducing the associated latency to adapt multimodal ML architecture 100 to the changed content moderation policy and also avoiding unnecessary compute, power, and time for training. Furthermore, fine-tuning only first modality MLP projector 116, second modality MLP projector 118, and LoRA layers of first modality encoder 106, second modality encoder 108, and ML model 122, as described with respect to **FIG. 5****,** provides a technical benefit of mitigating the inherent latency otherwise associated with deploying updated models for implementing any change in the content moderation policy, attributable to a significant amount of time and compute resources that would have been required to fine-tune multimodal ML architecture 100 end-to-end each time a change in the content moderation policy is to be implemented.

### Example Method of Performing Content Moderation

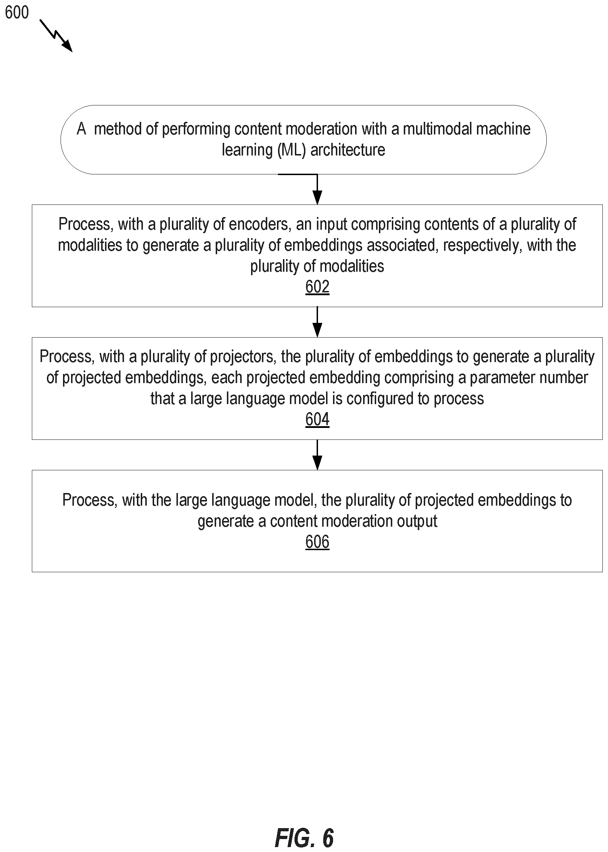

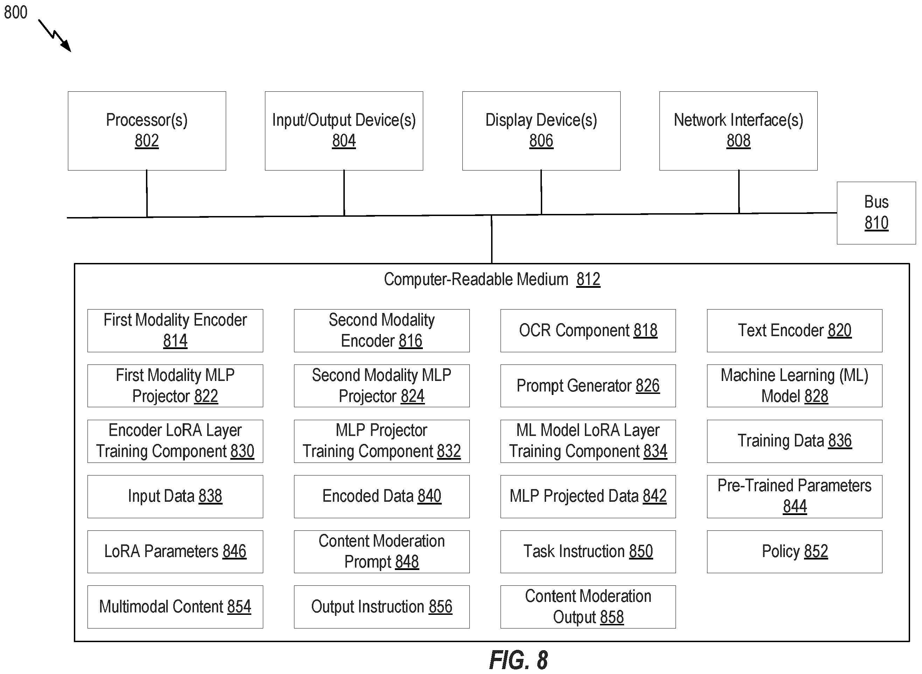

**FIG. 6** depicts an example method 600 of performing content moderation. In one aspect, method 600 can be implemented by multimodal ML architecture 100 of **FIG. 1** and/or processing system 800 of **FIG. 8****.**

Method 600 of performing content moderation with a multimodal ML architecture, wherein: the multimodal ML architecture includes: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, starts at block 602 with processing, with the plurality of encoders, an input including contents of the plurality of modalities to generate a plurality of embeddings associated, respectively, with the plurality of modalities. Processing the input to generate the plurality embeddings at block 602 corresponds to processing multimodal content 102 via modality encoder 104 as described with respect to **FIG. 1****.**

Method 600 continues to block 604 with processing, with the plurality of projectors, the plurality of embeddings to generate a plurality of projected embeddings, each projected embedding including a parameter number that the large language model is configured to process. Processing the plurality of embeddings to generate the plurality of projected embeddings at block 604 corresponds to processing, via MLP projector 114, the embeddings generated by first modality encoder 106 and second modality encoder 108 as described with respect to **FIG. 1****.**

Method 600 continues to block 606 with processing, with the large language model, the plurality of projected embeddings to generate the content moderation output. Processing the plurality of projected embeddings to generate the content moderation output at block 606 corresponds to processing, via ML model 122, a prompt generated by prompt generator 120 to include the projected embeddings generated by MLP projector 114 and the embeddings generated by text encoder 112 as described with respect to **FIG. 1****.**

In certain aspects, processing, with the plurality of encoders, the input including the contents of the plurality of modalities may include: processing, with an audio encoder, an audio content of the input, and processing, with an image encoder, an image content of the input.

In some aspects, each of the plurality of projectors may include one or more MLPs specific to one of the plurality of modalities.

In certain aspects, the large language model may include one or more modality-specific LoRA layers configured for following instructions for unimodal content moderation and multimodal content moderation.

In some aspects, the large language model may include a pre-trained large language model trained for unimodal content moderation.

In certain aspects, processing, with the large language model, the plurality of projected embeddings may include generating a content moderation prompt and prompting the large language model with the content moderation prompt, and the content moderation prompt may include: a task instruction; a customizable policy including a plurality of content moderation categories and associated descriptions; a multimodal content placeholder; and an output instruction. For example, the output instruction may include a description of an output structure, including: a proposed action; a content moderation category name indicative of a reason for the proposed action; a harm rating; and one or more example outputs. Moreover, the customizable policy and the multimodal content placeholder may be marked by a set of tokens indicating a beginning and an end of the customizable policy and a beginning and an end of the multimodal content placeholder.

Method 600 mitigates the need to deploy a newly fine-tuned multimodal ML architecture each time there is a need to adapt the multimodal ML architecture to a new content moderation policy. Such need to deploy the newly fine-tuned multimodal ML architecture is mitigated by adding the new content moderation policy in a content moderation prompt at inference time, such that the multimodal ML architecture tuned for instruction following can be adapted to the new content moderation policy without requiring a new iteration of fine-tuning. Accordingly, method 600 provides a technical benefit of mitigating the inherent latency otherwise associated with deploying updated models for implementing any change in the content moderation policy, attributable to a significant amount of time and compute resources that would have been required to fine-tune the multimodal ML architecture end-to-end each time a change in the content moderation policy is to be implemented.

Note that **FIG. 6** is just one example of a method, and other methods including fewer, additional, or alternative operations are possible consistent with this disclosure.

### Example Method of Training a Multimodal ML Architecture to Perform Content Moderation

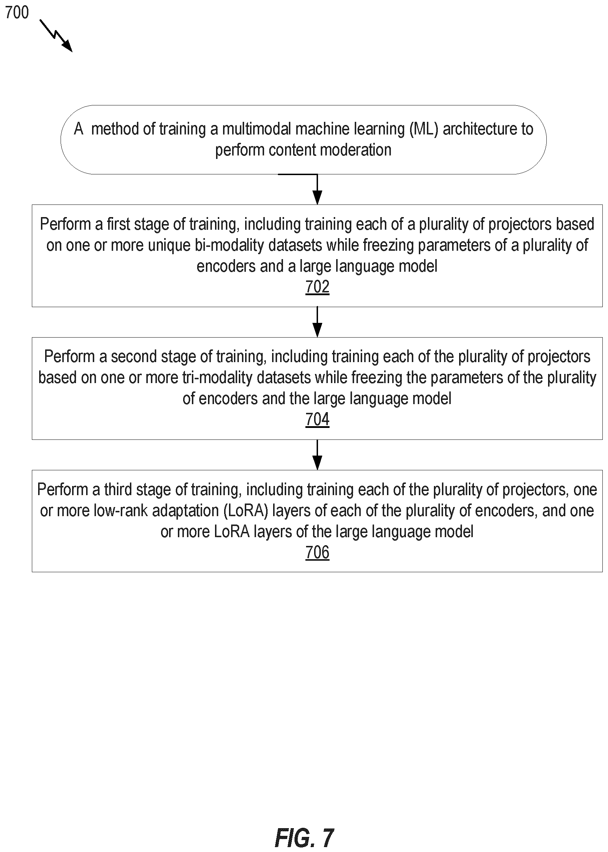

**FIG. 7** depicts an example method 700 of training a multimodal ML architecture to perform content moderation. In one aspect, method 700 can be implemented by multimodal ML architecture training system 502 of **FIG. 5** and/or processing system 800 of **FIG. 8****.**

Method 700 of training a multimodal ML architecture to perform content moderation, wherein: the multimodal ML architecture includes: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, starts at block 702 with performing a first stage of training, including training each of the plurality of projectors based on one or more unique bi-modality datasets while freezing parameters of the plurality of encoders and the large language model. Performing the first stage of training at block 702 corresponds to fine-tuning of first modality MLP projector 116 and/or second modality MLP projector 118 separately and independently by MLP projector training component 506 based on one or more unique bi-modality datasets, described with respect to **FIG. 5****.**

Method 700 continues to block 704 with performing a second stage of training, including training each of the plurality of projectors based on one or more tri-modality datasets while freezing the parameters of the plurality of encoders and the large language model. Performing the second stage of training at block 704 corresponds to fine-tuning of first modality MLP projector 116 and second modality MLP projector 118 simultaneously by MLP projector training component 506 based on one or more tri-modality datasets, having text, audio, and image components, described with respect to **FIG. 5****.**

Method 700 continues at block 706 with performing a third stage of training, including training each of the plurality of projectors, one or more LoRA layers of each of the plurality of encoders, and one or more LoRA layers of the large language model. Performing the third stage of training at block 706 corresponds to fine-tuning of first modality MLP projector 116, second modality MLP projector 118, and LoRA layers of first modality encoder 106, second modality encoder 108, and ML model 122 by multimodal ML architecture training system 502, described with respect to **FIG. 5****.**

In certain aspects, training each of the plurality of projectors based on the one or more unique bi-modality datasets may include: training a first MLP specific to an image modality while keeping the large language model and the plurality of encoders frozen, and training a second MLP specific to an audio modality while keeping the large language model and the plurality of encoders frozen.

In some aspects, training each of the plurality of projectors based on the unique bi-modality dataset may include training the first MLP and the second MLP separately and independently.

In certain aspects, the tri-modality dataset may include a plurality of segmented clips of a video, and each segmented clip of the plurality of segmented clips of the video may include a threshold level of similarity amongst a first image at a beginning of the segmented clip, a second image at a middle of the segmented clip, and a third image at an end of the segmented clip. For example, training each of the plurality of projectors based on the tri-modality dataset may include: training a first MLP specific to an image modality based on the second images of the plurality of segmented clips of the video, and training a second MLP specific to an audio modality based on audio content of the plurality of segmented clips of the video. Moreover, training each of the plurality of projectors based on the tri-modality dataset may include training the first MLP and the second MLP independently and simultaneously.

In some aspects, the first stage of training and the second stage of training may include a curriculum-based training of each of the plurality of projectors for aligning a plurality of parameters from a first representation associated with an encoded content from one of the plurality of encoders to a second representation associated with the large language model.

In certain aspects, performing the third stage of training may include training based on a content moderation instruction fine-tuning dataset including a unimodal dataset and a multimodal dataset, each including associated content moderation instructions.

Method 700 enables an instruction-following capability for multimodal ML architecture 100, such that multimodal ML architecture 100 can be more than, for example, just a classifier, and process a content moderation policy provided at inference time to determine whether a content, such as a multimodal content, is harmful. Further, by fine-tuning only MLP projector 114 and LoRA layers of first modality encoder 106, second modality encoder 108, and ML model 122 that are pre-trained, method 700 allows multimodal ML architecture 100 to retain the unimodal content moderation capabilities of the pre-trained components and to adapt these capabilities for multimodal content moderation. Thus, training multimodal ML architecture 100 according to method 700 mitigates the need to fine-tune multimodal ML architecture 100 each time there is a need to adapt multimodal ML architecture 100 to a new content moderation policy, such as a new multimodal content moderation policy. Accordingly, method 700 provides a technical benefit of reducing the latency associated with a significant amount of time and compute resources that would be required to fine-tune multimodal ML architecture 100 end-to-end to adapt it to multimodal content moderation, while, for example, the content moderation capabilities of the pre-trained architecture are retained.

Note that **FIG. 7** is just one example of a method, and other methods including fewer, additional, or alternative operations are possible consistent with this disclosure.

### Example Processing System for Performing Content Moderation and Training a Multimodal ML Architecture to Perform Content Moderation

**FIG. 8** depicts an example processing system 800 configured to perform various aspects described herein, including, for example, methods 600 and 700 as described above with respect to, respectively, **FIG. 6** and **FIG. 7****.**

Processing system 800 is generally an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 800 includes one or more processors 802, one or more input/output devices 804, one or more display devices 806, one or more network interfaces 808 through which processing system 800 is connected to one or more networks (e.g., a local network, an intranet, the Internet, or any other group of processing systems communicatively connected to each other), and computer-readable medium 812. In the depicted example, the aforementioned components are coupled by a bus 810, which may generally be configured for data exchange amongst the components. Bus 810 may be representative of multiple buses, while only one is depicted for simplicity.

Processor(s) 802 are generally configured to retrieve and execute instructions stored in one or more memories, including local memories like computer-readable medium 812, as well as remote memories and data stores. Similarly, processor(s) 802 are configured to store application data residing in local memories like the computer-readable medium 812, as well as remote memories and data stores. More generally, bus 810 is configured to transmit programming instructions and application data among the processor(s) 802, display device(s) 806, network interface(s) 808, and/or computer-readable medium 812. In certain aspects, processor(s) 802 are representative of one or more central processing units (CPUs), graphics processing units (GPUs), tensor processing units (TPUs), accelerators, and other processing devices.

Input/output device(s) 804 may include any device, mechanism, system, interactive display, and/or various other hardware and software components for communicating information between processing system 800 and a user of processing system 800. For example, input/output device(s) 804 may include input hardware, such as a keyboard, touch screen, button, microphone, speaker, and/or other device for receiving inputs from the user and sending outputs to the user.

Display device(s) 806 may generally include any sort of device configured to display data, information, graphics, user interface elements, and the like to a user. For example, display device(s) 806 may include internal and external displays such as an internal display of a tablet computer or an external display for a server computer or a projector. Display device(s) 806 may further include displays for devices, such as augmented, virtual, and/or extended reality devices. In various aspects, display device(s) 806 may be configured to display a graphical user interface.

Network interface(s) 808 provide processing system 800 with access to external networks and thereby to external processing systems. Network interface(s) 808 can generally be any hardware and/or software capable of transmitting and/or receiving data via a wired or wireless network connection. Accordingly, network interface(s) 808 can include a communication transceiver for sending and/or receiving any wired and/or wireless communication.

Computer-readable medium 812 may be a volatile memory, such as a random access memory (RAM), or a nonvolatile memory, such as nonvolatile random access memory (NVRAM), or the like. Such memory devices may be described as non-transitory in nature, whether or not the content stored therein can be changed over time by way of, for example, write operations, delete operations etc. In this example, computer-readable medium 812 includes first modality encoder 814, second modality encoder 816, OCR component 818, text encoder 820, first modality MLP projector 822, second modality MLP projector 824, prompt generator 826, ML model 828, encoder LoRA layer training component 830, MLP projector training component 832, ML model LoRA layer training component 834, training data 836, input data 838, encoded data 840, MLP projected data 842, pre-trained parameters 844, LoRA parameters 846, content moderation prompt 848, task instruction 850, policy 852, multimodal content 854, output instruction 856, and content moderation output 858.

First modality encoder 814 and second modality encoder 816 may correspond to, respectively, first modality encoder 106 and second modality encoder 108 of **FIG. 1****.** OCR component 818 and text encoder 820 may correspond to, respectively, OCR component 110 and text encoder 112 of **FIG. 1****.** First modality MLP projector 822 and second modality MLP projector 824 may correspond to, respectively, first modality MLP projector 116 and second modality MLP projector 118 of **FIG. 1****.** Prompt generator 826 and ML model 828 may correspond to, respectively, prompt generator 120 and ML model 122 of **FIG. 1****.** Encoder LoRA layer training component 830, MLP projector training component 832, and ML model LoRA layer training component 834 may correspond to, respectively, encoder LoRA layer training component 504, MLP projector training component 506, and ML model LoRA layer training component 508 of **FIG. 5****.** Training data 836 may include the bi-modality datasets and the tri-modality datasets described with respect to **FIG. 5****.** Input data 838, encoded data 840, and MLP projected data 842 may correspond to multimodal content 102, embeddings generated by modality encoder 104, and projected embeddings generated by MLP projector 114, described with respect to **FIG. 1****.** Pre-trained parameters 844 and LoRA parameters 846 may include, respectively, first pre-trained parameters 202, second pre-trained parameters 206, third pre-trained parameters 210, first updated parameters 204, second updated parameters 208, and third updated parameters 212, described with respect to **FIG. 2****.** Content moderation prompt 848, task instruction 850, policy 852, multimodal content 854, and output instruction 856 may correspond to content moderation prompt 302, task instruction 304, policy 306, multimodal content 308, and output instruction 310 of **FIG. 3****.** Content moderation output 858 may correspond to content moderation output based on output instruction 310, described with respect to **FIG. 3****.**

In certain aspects, first modality encoder 814, second modality encoder 816, and/or text encoder 820 may be configured to perform block 602 of method 600. Moreover, first modality MLP projector 822 and/or second modality MLP projector 824 may be configured to perform block 604 of method 600. Furthermore, ML model 828 may be configured to perform block 606 of method 600.

In some aspects, MLP projector training component 832 may be configured to perform blocks 702 and 704 of method 700. Moreover, encoder LoRA layer training component 830, MLP projector training component 832, and ML model LoRA layer training component 834 may be configured to perform block 706 of method 700.

Although the computer-readable medium 812 is illustrated as a memory in which data, code or instructions for the various modules and other elements may be stored, a computer readable medium may also or alternatively take the form of a transmission medium by which such data, code or instructions may be conveyed. A computer-readable transmission medium may include carrier waves, transmission signals or the like. A computer-readable transmission medium may convey instructions between components of a single computer system and/or between plural separate computer systems. Thus, in the context of Figure 87, a computer -readable transmission medium may include signals or packets transmitted or received via network interface 808 and/or signals/packets conveyed over bus 810.

Note that **FIG. 8** is just one example of a processing system consistent with aspects described herein, and other processing systems having additional, alternative, or fewer components are possible consistent with this disclosure.

Therefore, from one perspective, there have been described approaches for performing content moderation with a multimodal machine learning (ML) architecture, wherein: the multimodal ML architecture includes: a plurality of encoders, each configured to encode content of one of a plurality of modalities; a plurality of projectors, each associated with one of the plurality of encoders and configured to process output from the one of the plurality of encoders; and a large language model configured to generate a content moderation output based on outputs from the plurality of projectors, and the method includes: processing an input including contents of the plurality of modalities to generate a plurality of embeddings associated, respectively, with the plurality of modalities; processing the plurality of embeddings to generate a plurality of projected embeddings, each including a parameter number that the large language model is configured to process; and processing the plurality of projected embeddings to generate the content moderation output.

### Example Clauses

Implementation examples are described in the following numbered clauses:
Clause 1: A method of performing content moderation with a multimodal machine learning (ML) architecture, wherein: the multimodal ML architecture comprises: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, and the method comprises: processing, with the plurality of encoders, an input comprising contents of the plurality of modalities to generate a plurality of embeddings associated, respectively, with the plurality of modalities; processing, with the plurality of projectors, the plurality of embeddings to generate a plurality of projected embeddings, each projected embedding comprising a parameter number that the large language model is configured to process; and processing, with the large language model, the plurality of projected embeddings to generate the content moderation output.
Clause 2: The method in accordance with Clause 1, wherein processing, with the plurality of encoders, the input comprising the contents of the plurality of modalities comprises: processing, with an audio encoder, an audio content of the input, and processing, with an image encoder, an image content of the input.
Clause 3: The method in accordance with any one of Clauses 1-2, wherein each of the plurality of projectors comprises one or more multilayer perceptrons (MLPs) specific to one of the plurality of modalities.
Clause 4: The method in accordance with any one of Clauses 1-3, wherein the large language model comprises one or more modality-specific low-rank adaptation (LoRA) layers configured for following instructions for unimodal content moderation and multimodal content moderation.
Clause 5: The method in accordance with any one of Clauses 1-4, wherein the large language model comprises a pre-trained large language model trained for unimodal content moderation.
Clause 6: The method in accordance with any one of Clauses 1-5, wherein: processing, with the large language model, the plurality of projected embeddings comprises generating a content moderation prompt and prompting the large language model with the content moderation prompt, and the content moderation prompt comprises: a task instruction; a customizable policy comprising a plurality of content moderation categories and associated descriptions; a multimodal content placeholder; and an output instruction.
Clause 7: The method in accordance with Clause 6, wherein the output instruction comprises a description of an output structure, comprising: a proposed action; a content moderation category name indicative of a reason for the proposed action; a harm rating; and one or more example outputs.
Clause 8: The method in accordance with any one of Clauses 6-7, wherein the customizable policy and the multimodal content placeholder are marked by a set of tokens indicating a beginning and an end of the customizable policy and a beginning and an end of the multimodal content placeholder.
Clause 9: A method of training a multimodal machine learning (ML) architecture to perform content moderation, wherein: the multimodal ML architecture comprises: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, and the method comprises: performing a first stage of training, including training each of the plurality of projectors based on one or more unique bi-modality datasets while freezing parameters of the plurality of encoders and the large language model; performing a second stage of training, including training each of the plurality of projectors based on one or more tri-modality datasets while freezing the parameters of the plurality of encoders and the large language model; and performing a third stage of training, including training each of the plurality of projectors, one or more low-rank adaptation (LoRA) layers of each of the plurality of encoders, and one or more LoRA layers of the large language model.
Clause 10: The method in accordance with Clause 9, wherein training each of the plurality of projectors based on the one or more unique bi-modality datasets comprises: training a first multilayer perceptron (MLP) specific to an image modality while keeping the large language model and the plurality of encoders frozen, and training a second MLP specific to an audio modality while keeping the large language model and the plurality of encoders frozen.
Clause 11: The method in accordance with Clause 10, wherein training each of the plurality of projectors based on the one or more unique bi-modality datasets comprises training the first MLP and the second MLP separately.
Clause 12: The method in accordance with any one of Clauses 9-11, wherein: the one or more tri-modality datasets comprises a plurality of segmented clips of a video, and each segmented clip of the plurality of segmented clips of the video comprises a threshold level of similarity amongst a first image at a beginning of the segmented clip, a second image at a middle of the segmented clip, and a third image at an end of the segmented clip.
Clause 13: The method in accordance with Clause 12, wherein training each of the plurality of projectors based on the one or more tri-modality datasets comprises: training a first multilayer perceptron (MLP) specific to an image modality based on the second images of the plurality of segmented clips of the video, and training a second MLP specific to an audio modality based on audio content of the plurality of segmented clips of the video.
Clause 14: The method in accordance with Clause 13, wherein training each of the plurality of projectors based on the one or more tri-modality datasets comprises training the first MLP and the second MLP independently and simultaneously.
Clause 15: The method in accordance with Clause 13, wherein the first stage of training and the second stage of training comprise a curriculum-based training of each of the plurality of projectors for aligning a plurality of parameters from a first representation associated with an encoded content from one of the plurality of encoders to a second representation associated with the large language model.
Clause 16: The method in accordance with Clause 13, wherein performing the third stage of training comprises training based on a content moderation instruction fine-tuning dataset comprising a unimodal dataset and a multimodal dataset, each comprising associated content moderation instructions.
Clause 17: A processing system, comprising: a memory comprising computer-executable instructions; and a processor configured to execute the computer-executable instructions and cause the processing system to perform a method in accordance with any one of Clauses 1-16.
Clause 18: A processing system, comprising means for performing a method in accordance with any one of Clauses 1-16.
Clause 19: A computer-readable medium comprising program code for causing a processing system to perform the steps of any one of Clauses 1-16.
Clause 20: A computer program product embodied on a computer-readable storage medium comprising code for performing a method in accordance with any one of Clauses 1-16.
Clause 21. A method of performing content moderation with a multimodal machine learning (ML) architecture, wherein: the multimodal ML architecture comprises: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, and the method comprises: processing, with the plurality of encoders, an input comprising contents of the plurality of modalities to generate a plurality of embeddings associated, respectively, with the plurality of modalities; processing, with the plurality of projectors, the plurality of embeddings to generate a plurality of projected embeddings, each projected embedding comprising a parameter number that the large language model is configured to process; and processing, with the large language model, the plurality of projected embeddings to generate the content moderation output.
Clause 22. The method of clause 21, wherein processing, with the plurality of encoders, the input comprising the contents of the plurality of modalities comprises: processing, with an audio encoder, an audio content of the input, and processing, with an image encoder, an image content of the input.
Clause 23. The method of clause 21 or 22, wherein each of the plurality of projectors comprises one or more multilayer perceptrons (MLPs) specific to one of the plurality of modalities.
Clause 24. The method of clause 21, 22 or 23, wherein the large language model comprises one or more modality-specific low-rank adaptation (LoRA) layers configured for following instructions for unimodal content moderation and multimodal content moderation.
Clause 25. The method of any of clauses 21 to 24, wherein the large language model comprises a pre-trained large language model trained for unimodal content moderation.
Clause 26. The method of any of clauses 21 to 25, wherein: processing, with the large language model, the plurality of projected embeddings comprises generating a content moderation prompt and prompting the large language model with the content moderation prompt, and the content moderation prompt comprises: a task instruction; a customizable policy comprising a plurality of content moderation categories and associated descriptions; a multimodal content placeholder; and an output instruction.
Clause 27. The method of clause 26, wherein the output instruction comprises a description of an output structure, comprising: a proposed action; a content moderation category name indicative of a reason for the proposed action; a harm rating; and one or more example outputs.
Clause 28. The method of clause 26 or 27, wherein the customizable policy and the multimodal content placeholder are marked by a set of tokens indicating a beginning and an end of the customizable policy and a beginning and an end of the multimodal content placeholder.
Clause 29. A processing system, comprising: a multimodal machine learning (ML) architecture, comprising: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors; a memory comprising computer-executable instructions; and a processor configured to execute the computer-executable instructions and cause the processing system to: process, with the plurality of encoders, an input comprising contents of the plurality of modalities to generate a plurality of embeddings associated, respectively, with the plurality of modalities; process, with the plurality of projectors, the plurality of embeddings to generate a plurality of projected embeddings, each projected embedding comprising a parameter number that the large language model is configured to process; and process, with the large language model, the plurality of projected embeddings to generate the content moderation output.
Clause 30. The processing system of clause 29, wherein each of the plurality of projectors comprises one or more multilayer perceptrons (MLPs) specific to one of the plurality of modalities.
Clause 31. The processing system of clause 29 or 30, wherein the large language model comprises one or more modality-specific low-rank adaptation (LoRA) layers configured for following instructions for unimodal content moderation and multimodal content moderation.
Clause 32. The processing system of clause 29, 30 or 31, wherein the large language model comprises a pre-trained large language model trained for unimodal content moderation.
Clause 33. A method of training a multimodal machine learning (ML) architecture to perform content moderation, wherein: the multimodal ML architecture comprises: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, and the method comprises: performing a first stage of training, including training each of the plurality of projectors based on one or more unique bi-modality datasets while freezing parameters of the plurality of encoders and the large language model; performing a second stage of training, including training each of the plurality of projectors based on one or more tri-modality datasets while freezing the parameters of the plurality of encoders and the large language model; and performing a third stage of training, including training each of the plurality of projectors, one or more low-rank adaptation (LoRA) layers of each of the plurality of encoders, and one or more LoRA layers of the large language model.
Clause 34. The method of clause 33, wherein training each of the plurality of projectors based on the one or more unique bi-modality datasets comprises: training a first multilayer perceptron (MLP) specific to an image modality while keeping the large language model and the plurality of encoders frozen, and training a second MLP specific to an audio modality while keeping the large language model and the plurality of encoders frozen.
Clause 35. The method of clause 34, wherein training each of the plurality of projectors based on the one or more unique bi-modality datasets comprises training the first MLP and the second MLP separately.
Clause 36. The method of clause 33, 34 or 35, wherein: the one or more tri-modality datasets comprises a plurality of segmented clips of a video, and each segmented clip of the plurality of segmented clips of the video comprises a threshold level of similarity amongst a first image at a beginning of the segmented clip, a second image at a middle of the segmented clip, and a third image at an end of the segmented clip.
Clause 37. The method of clause 36, wherein training each of the plurality of projectors based on the one or more tri-modality datasets comprises: training a first multilayer perceptron (MLP) specific to an image modality based on the second images of the plurality of segmented clips of the video, and training a second MLP specific to an audio modality based on audio content of the plurality of segmented clips of the video.
Clause 38. The method of clause 37, wherein training each of the plurality of projectors based on the one or more tri-modality datasets comprises training the first MLP and the second MLP independently and simultaneously.
Clause 39. The method of any of clauses 33 to 38, wherein the first stage of training and the second stage of training comprise a curriculum-based training of each of the plurality of projectors for aligning a plurality of parameters from a first representation associated with an encoded content from one of the plurality of encoders to a second representation associated with the large language model.
Clause 40. The method of any of clause 33 to 39, wherein performing the third stage of training comprises training based on a content moderation instruction fine-tuning dataset comprising a unimodal dataset and a multimodal dataset, each comprising associated content moderation instructions.

### Additional Considerations

The preceding description is provided to enable any person skilled in the art to practice the various aspects described herein. The examples discussed herein are not limiting of the scope, applicability, or aspects set forth in the claims. Various modifications to these aspects will be readily apparent to those skilled in the art, and the generic principles defined herein may be applied to other aspects. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the aspects shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method of performing content moderation with a multimodal machine learning (ML) architecture that comprises: a plurality of encoders, each encoder configured to encode content of one of a plurality of modalities; a plurality of projectors, each projector associated with one of the plurality of encoders and configured to process output from the one of the plurality of encoders; and a large language model configured to generate a content moderation output based on outputs from the plurality of projectors, the method comprising:
processing, with the plurality of encoders, an input comprising contents of the plurality of modalities to generate a plurality of embeddings associated, respectively, with the plurality of modalities;
processing, with the plurality of projectors, the plurality of embeddings to generate a plurality of projected embeddings, each projected embedding comprising a parameter number that the large language model is configured to process; and
processing, with the large language model, the plurality of projected embeddings to generate the content moderation output.

2. The method of Claim 1, wherein each of the plurality of projectors comprises one or more multilayer perceptrons (MLPs) specific to one of the plurality of modalities.

3. The method of Claim 1 or 2, wherein the large language model comprises one or more modality-specific low-rank adaptation (LoRA) layers configured for following instructions for unimodal content moderation and multimodal content moderation.

4. The method of any of Claims 1 to 3, wherein the large language model comprises a pre-trained large language model trained for unimodal content moderation.

5. The method of any of Claims 1 to 4, wherein:
processing, with the large language model, the plurality of projected embeddings comprises generating a content moderation prompt and prompting the large language model with the content moderation prompt, and
the content moderation prompt comprises:
a task instruction;
a customizable policy comprising a plurality of content moderation categories and associated descriptions;
a multimodal content placeholder; and
an output instruction.

6. The method of Claim 5, wherein the output instruction comprises a description of an output structure, comprising:
a proposed action;
a content moderation category name indicative of a reason for the proposed action;
a harm rating; and
one or more example outputs.

7. The method of Claim 5 or 6, wherein the customizable policy and the multimodal content placeholder are marked by a set of tokens indicating a beginning and an end of the customizable policy and a beginning and an end of the multimodal content placeholder.

8. A method of training a multimodal machine learning (ML) architecture to perform content moderation, wherein:
the multimodal ML architecture comprises:
a plurality of encoders, each encoder configured to encode content of one of a plurality of modalities;
a plurality of projectors, each projector associated with one of the plurality of encoders and configured to process output from the one of the plurality of encoders; and
a large language model configured to generate a content moderation output based on outputs from the plurality of projectors, and
the method comprises:
performing a first stage of training, including training each of the plurality of projectors based on one or more unique bi-modality datasets while freezing parameters of the plurality of encoders and the large language model;
performing a second stage of training, including training each of the plurality of projectors based on one or more tri-modality datasets while freezing the parameters of the plurality of encoders and the large language model; and
performing a third stage of training, including training each of the plurality of projectors, one or more low-rank adaptation (LoRA) layers of each of the plurality of encoders, and one or more LoRA layers of the large language model.

9. The method of Claim 8, wherein training each of the plurality of projectors based on the one or more unique bi-modality datasets comprises:
training a first multilayer perceptron (MLP) specific to an image modality while keeping the large language model and the plurality of encoders frozen, and
training a second MLP specific to an audio modality while keeping the large language model and the plurality of encoders frozen.

10. The method of Claim 9, wherein training each of the plurality of projectors based on the one or more unique bi-modality datasets comprises training the first MLP and the second MLP separately.

11. The method of Claim 8, 9 or 10, wherein:
the one or more tri-modality datasets comprises a plurality of segmented clips of a video, and
each segmented clip of the plurality of segmented clips of the video comprises a threshold level of similarity amongst a first image at a beginning of the segmented clip, a second image at a middle of the segmented clip, and a third image at an end of the segmented clip.

12. The method of Claim 11, wherein training each of the plurality of projectors based on the one or more tri-modality datasets comprises:
training a first multilayer perceptron (MLP) specific to an image modality based on the second images of the plurality of segmented clips of the video, and
training a second MLP specific to an audio modality based on audio content of the plurality of segmented clips of the video.

13. The method of Claim 12, wherein training each of the plurality of projectors based on the one or more tri-modality datasets comprises training the first MLP and the second MLP independently and simultaneously.

14. The method of any of Claims 8 to 13, wherein the first stage of training and the second stage of training comprise a curriculum-based training of each of the plurality of projectors for aligning a plurality of parameters from a first representation associated with an encoded content from one of the plurality of encoders to a second representation associated with the large language model.

15. The method of any of Claims 8 to 14, wherein performing the third stage of training comprises training based on a content moderation instruction fine-tuning dataset comprising a unimodal dataset and a multimodal dataset, each comprising associated content moderation instructions.
